# EUROPEAN PATENT APPLICATION

(11) **EP 3 421 218 A1**
(43) Date of publication of application: **02.01.2019**
(21) Application number: 17756445.7
(22) Date of filing: 20.02.2017
(51) Int. Cl.: B29C 45/76, B22D 17/32

(54) **DISPLAY OPERATION DEVICE AND MOLDING MACHINE**

(30) Priority: 22.02.2016 JP 2016030890
(71) Applicant: Toyo Machinery & Metal Co., Ltd., Akashi-shi, Hyogo 674-0091 (JP)
(72) Inventor: TARUYA, Kouji, Hyogo 674-0091 (JP); HAYASHI, Yu, Hyogo 674-0091 (JP)
(74) Representative: Schön, Christoph
(86) International application number: PCT/JP2017/006225
(87) International publication number: WO 2017/146007

(57) **Abstract**

[Problem] To provide: a display operation device with which it is possible to effectively increase the accuracy of an operation input to an operation switch when a function allocated to the operation switch cannot be recognized; and a molding machine that is provided with said device. [Solution] This display operation device 20 for an injection molding machine 1 has a display unit 21 and a simple display unit 55 having a simpler configuration than the display unit 21. The display operation device 20 displays a selected function group on the simple display unit 55 even when a function label that indicates the functions allocated to a plurality of operation switches 41-50 is not being displayed due to the fact that the display function of the display unit 21 has been stopped.

## Description

### FIELD OF THE INVENTION

The present invention relates to a display operation device that a molding machine of an injection molding machine and a die-casting machine comprises, and also relates to a molding machine comprising such a display operation device.

### BACKGROUND OF THE INVENTION

Patent document 1 discloses a display device of an injection molding machine. The display device comprises a display unit and a plurality of direct screen selecting buttons. When one of the plurality of direct screen selecting buttons is pressed, a screen assigned to the pressed button is displayed at the display unit. The display device switches a plurality of screens according to an operation of the plurality of direct screen selecting buttons

In the above-described display device, one screen is assigned to each of the plurality of direct screen selecting buttons. Accordingly, at least a number of direct screen selecting buttons equal to that of screens to be switched are required. In order to decrease the number of the direct screen selecting buttons, two or more screens are assigned to the direct screen selecting buttons, and assignment of the screens to each button should be dynamically switched.

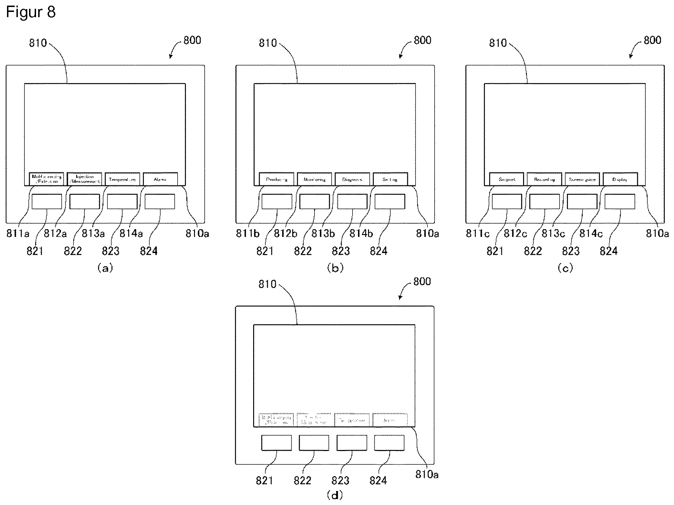

As an example of such configuration, a display device 800 shown in Fig. 8 comprises a display unit 810 consisting of a liquid crystal display device having a touch panel, and a plurality of direct screen selecting buttons 821 to 824 arranged adjacent to a lower edge 810a of the display unit 810. The display device 800 has twelve types of screens, which are divided into three groups with four types of screens. In the display device 800, the four types of screens belonging to the selected one of three groups are assigned to the direct screen selecting buttons 821 to 824, respectively. Labels showing the four types of screens are displayed at a lower part of the display unit 810 so as to correspond to the direct screen selecting buttons 821 to 824.

For example, when a first group is selected, as shown in Fig. 8(a), labels 811a to 814a are displayed which show each of the four types of screens assigned to each of the direct screen selecting buttons 821 to 824. When a second group is selected, as shown in Fig. 8(b), labels 811b to 814b are displayed which show each of the four types of screens assigned to each of the direct screen selecting buttons 821 to 824. When a third group is selected, as shown in Fig. 8(c), labels 811c to 814c are displayed which show each of the four types of screens assigned to each of the direct screen selecting buttons 821 to 824. By providing a left swipe operation on the touch panel of the display unit 810, the selected groups are switched in order of such as "first group" => "second group" => "third group" => "first group" => .... On the other hand, by providing a right swipe operation, the selected groups are switched in order of "first group" => "third group" => "second group" => "first group" => ....

### PRIOR ART DOCUMENTS

### PATENT DOCUMENTS

Patent Literature 1: JP 2001-145947 A

### SUMMARY OF THE INVENTION

### PROBLEM TO BE SOLVED BY INVENTION

In the above-described display device 800, when an operation is not made over a certain time period, a back light of a liquid crystal display device is turned off and the display device 800 is shifted to a power saving mode. Thereby, the display unit 810 becomes dark in the power saving mode, and as shown in Fig. 8(d), the above-described labels are not sufficiently visually recognized. Even though the labels are not sufficiently visually recognized and the screens assigned to the direct screen selecting buttons can not be recognized, an operator may presume the screens assigned to currently selected group and each button according to his memory and operate the direct screen selecting buttons. At this moment, an intentional operation may be provided if presumption of the operator is not correct. In the display device 800, the screen to be displayed, namely screen switching function, is assigned to each of the direct screen selecting buttons, however instead of the screen, function relating to an injection molding such as mold opening/closing and injection may be assigned to each button.

The object of the present invention is to provide a display operation device and a molding machine comprising the same, wherein accuracy of an input operation provided to an operation switch is effectively improved in a condition that function assigned to the operation switch is not recognized.

### MEANS FOR SOLVING THE PROBLEM

In order to accomplish the above-described object, according to the present invention, there is provided a display operation device comprising:
a display unit,
a plurality of operation switches which is arranged adjacent to the display unit, and to which function included in a selected function group of a plurality of function groups is assigned,
a function label display control unit configured to display function labels showing functions assigned to the plurality of operation switches on the display unit,
a display function stop unit configured to stop display function of the display unit,
a simple display unit arranged adjacent to the plurality of operation switches, and
a function group display control unit configured to display the selected function group on the simple display unit when at least the display function stop unit stops the display function of the display unit.

According to the present invention, there is provided a simple display unit having a relative simple structure compared with a display unit. Therefore, even if function labels showing functions assigned to a plurality of operation switch are not displayed by stopping the display function of the display unit, a selected function group can be displayed at the simple display unit. Thus, an operator can more certainly recognize the selected function group, and an estimate range of the function assigned to the operation switch can be narrowed. Therefore, the accuracy of an input operation is effectively improved in a condition that function assigned to the operation switch is not recognized.

According to the present invention, it is preferable that different colors are correlated with the plurality of function groups, respectively, the simple display unit comprises an emitting unit emittable in colors correlated with the plurality of function groups, respectively, and the function group display control unit makes the emitting unit emit light in a color correlated with the selected function group, and the simple display unit displays the selected function group. Thus, the selected function group can be displayed by the color emitted by an emitting unit, and the function group can be displayed with a simple structure.

According to the present invention, the emitting unit may be arranged so as to surround the plurality of operation switches. Thus, strong impression that a plurality of operation switches and the emitting unit are related each other can be provided, and the operator can more certainly recognize meaning of the color emitted from the emitting unit.

According to the present invention, it is preferable that the function label display control unit changes display of the function label corresponding to the operation switch, when an operation is provided to the function switch. Thus, the operator can more certainly recognize the operation switches to which the operation is provided and functions assigned the operation switches.

According to the present invention, it is preferable that the display operation device comprises a touch panel arranged to overlap the display unit, and a function group switching unit configured to switch the selected function group of the plurality of function groups in accordance with an input of function group selection switching operation to the touch panel, and
the function group selection switching operation is a swipe operation that an operation tool touching a surface of the touch panel is slid in a determined direction and released from the surface of the touch panel. Thus, the function group selected by an intuitive operation can be switched.

In order to achieve the above object, a molding machine according to another embodiment of the present invention comprises the above-described display operation device and a molding device operating corresponding to an operation provided to the display operation device. According to the present invention, the display operation device is provided and an estimate range of the function assigned to the operation switch can be narrowed. Therefore, the accuracy of an input operation provided to the operation switch is effectively improved in a condition that function assigned to the operation switch is not recognized.

### EFFECTS OF THE INVENTION

According to the present invention, the accuracy of an input operation provided to an operation switch is effectively improved in a condition that function assigned to the operation switch is not recognized, therefore an input by an unintentional operation can be suppressed.

### BRIEF DESCRIPTION OF THE DRAWINGS

Fig. 1 is a front view of an injection molding machine according to an embodiment of the present invention.
Fig. 2 is a front view of a display operation device of the injection molding machine of Fig. 1.
Fig. 3 is a functional brock diagram showing a schematic structure of the injection molding machine of Fig. 1.
Fig. 4 illustrates a condition that functions included in a first function group are assigned to a plurality of operation switches in the display operation device of Fig. 2.
Fig. 5 illustrates a condition that functions included in a second function group are assigned to a plurality of operation switches in the display operation device of Fig. 2.
Fig. 6 illustrates an enlarged part of the display operation device of Fig. 2.
Fig. 7 is a front view showing a variation of the display operation device of Fig. 2.
Fig. 8 is a front view of a conventional display device.

### DESCRIPTION OF THE EMBODIMENTS

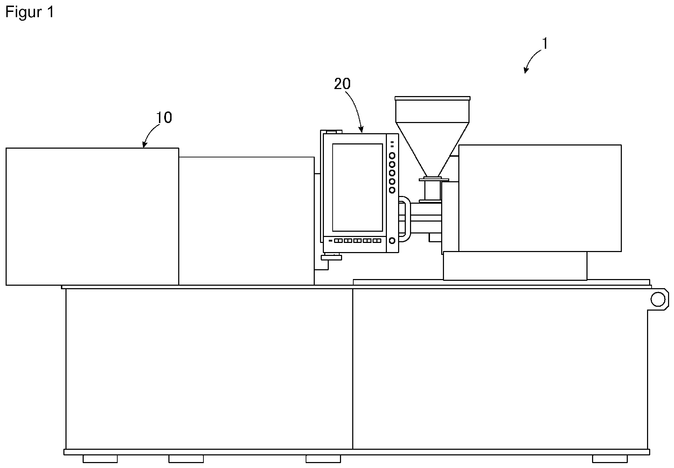

Hereinafter, an injection molding machine according to a preferred embodiment of the present invention will be described referring to the Figs 1 to 6.

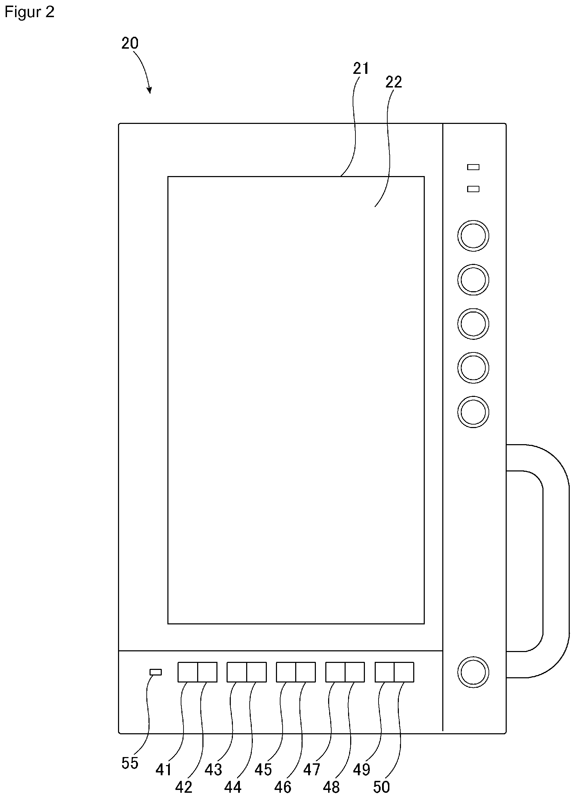

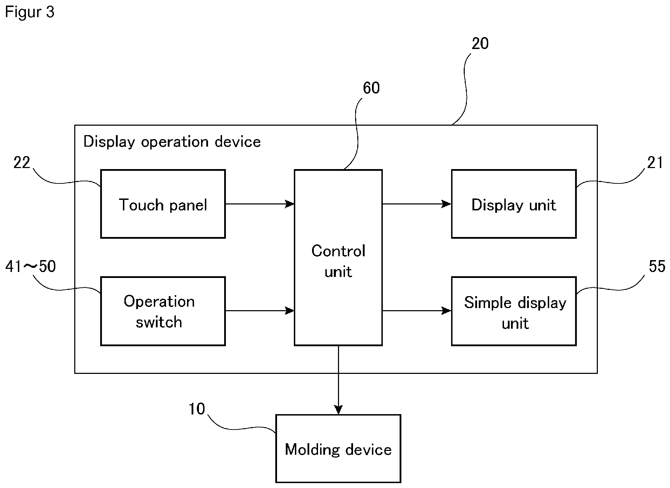

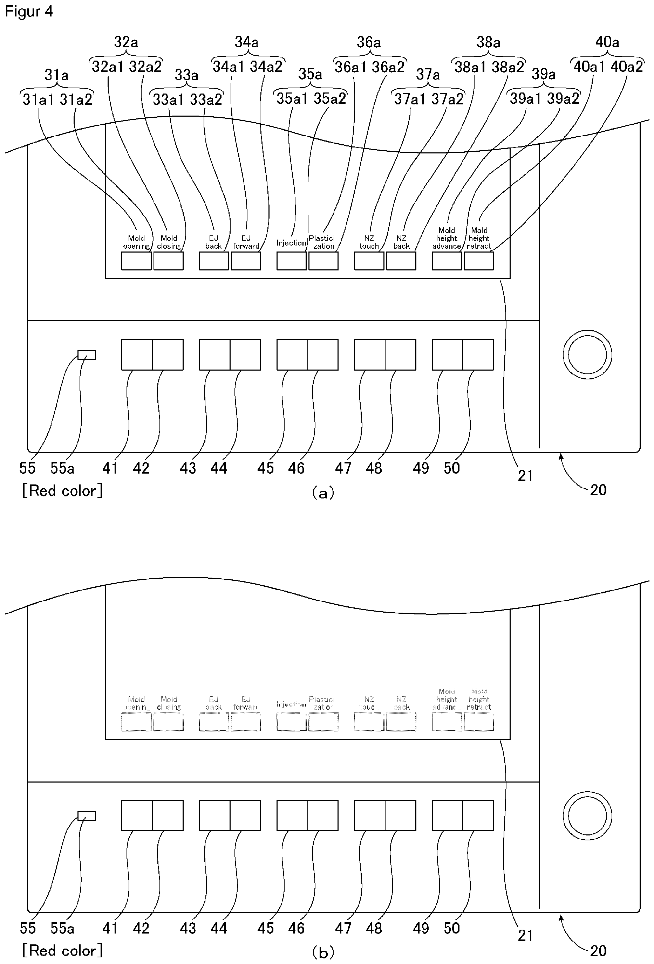

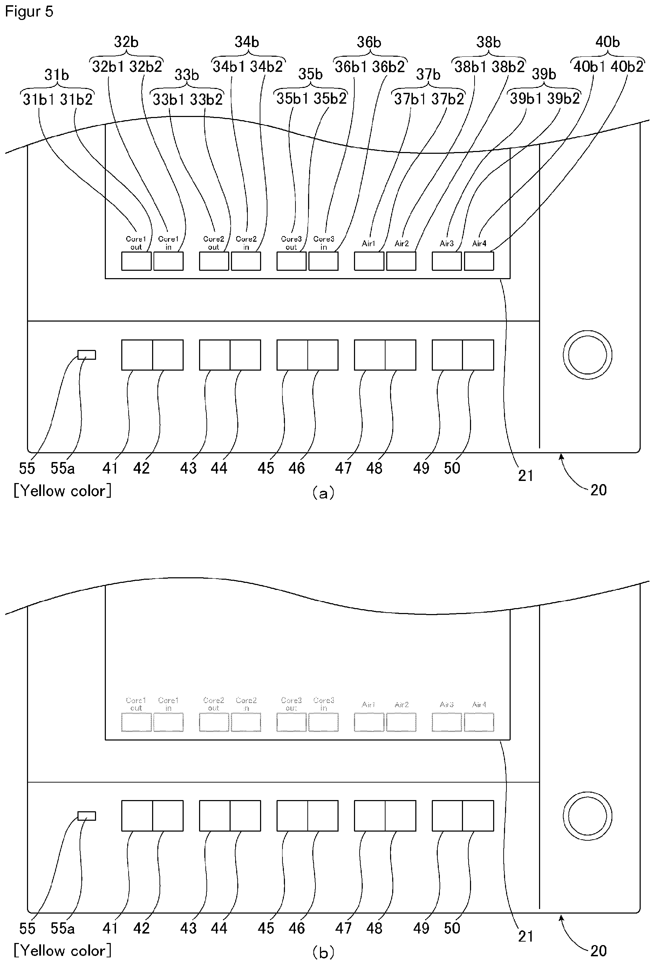

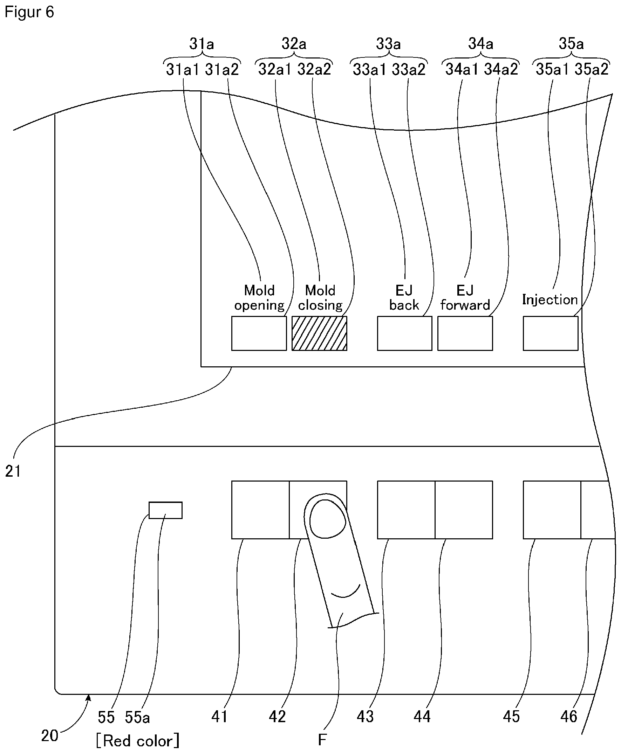

Fig. 1 is a front view of an injection molding machine according to an embodiment of the present invention. Fig. 2 is a front view of a display operation device of the injection molding machine of Fig. 1. Fig. 3 is a functional brock diagram showing a schematic structure of the injection molding machine of Fig. 1. Fig. 4 illustrates a condition that functions included in a first function group are assigned to a plurality of operation switches. Fig. 5 illustrates a condition that functions included in a second function group are assigned to a plurality of operation switches. Fig. 6 illustrates an enlarged part of the display operation device of Fig. 2.

As shown in Fig. 1, an injection molding machine 1 comprises a molding device 10 and a display operation device 20.

The molding device 10 comprises (1) a heating cylinder, (2) a screw stored in the heating cylinder rotatably and movably backward and forward, (3) a hopper disposed at an end side of the heating cylinder and providing raw material resin to a groove of the screw, (4) a mold clamping device arranged at a top of the heating cylinder and provided with a mold, (5) a band heater for heating the heating cylinder, (6) a driving unit for rotating the screw, (7) a driving unit for moving the screw forward and backward, (8) a driving unit for opening/closing the mold and protruding a molded article in the mold clamping device, (9) a driver group for driving the driving unit included in (1) to (8), (10) a sensor group for detecting information related to injection molding, and (11) a controller.

A controller of the molding device 10 is a function unit for controlling an entire operation of the molding device 10, and comprises a computer. The molding device 10 controls an entire molding process including operations of plasticization, injection, mold opening/closing, and ejection, and carries out a series of the injection molding operation relating the injection molding, such as calculating and storing process of an actual measurement value of a sensor group, determining process of good and defective products, and calculating and determining process of abnormality determining process. Additionally, the molding device 10 is communicably connected to a below-described display operation device 20, and transmits display information to the display operation device 20 and receives function execution instruction information from the display operation device 20.

The display operation device 20 comprises, as shown in Figs. 2 and 3, a display unit 21, a touch panel 22, operation switches 41 to 50, a simple display unit 55 and a controller 60.

The display unit 21 comprises for example, a flat panel display such as a liquid crystal display device and an organic EL display. The display unit 21 displays information such as numbers, images and graphs, and operation items such as a text input area, a keyboard and a ten keys in accordance with display information provided from the below-described controller 60.

The touch panel 22 is arranged to overlap a display surface of the display unit 21. An operator provides a touch operation to a part corresponding to the above-operation item shown in the display unit 21. For example, the touch operation includes a tap operation (a touch in a relatively short period of time using an operation tool such as a finger and a touch operation pen), a long tap operation (a touch in a relatively long period of time using the operation tool), a flick operation (short sweep or short slide in a determined direction after touching the operation tool), and a swipe operation (while touching the operation tool on a surface of the touch panel, the operation tool is slid in one direction and after that released from the surface of the touch panel).

The operation switches 41 to 50 are push-button switches and arranged in a horizontal direction along a lower edge of the display unit 21. There are 20 kinds of functions to be assigned to the operation switches 41 to 50 according to the present embodiments, and these 20 kinds of functions are divided into a first function group G1 and a second function group G2. The functions included in the selected function group either the first function group G1 and the second function group G2 are dynamically assigned to the operation switches 41 to 50.

The functions included in the first function group G1 are "mold opening", "mold closing", "EJ retract (back)", "EJ forward", "Injection", "plasticization", "NZ touch", "NZ back", "mold height advance" and "mold height retract". When the first function group G1 is selected, these functions are assigned to the operation switches 41 to 50, respectively. Red color is correlated with the first function group G1.

The functions included in the second function group G2 are "core 1 out", "core 1 in", "core 2 out", "core 2 in", "core 3 out", "core 3 in", "air 1", "air 2", "air 3" and "air 4". When the second function group G2 is selected, these functions are assigned to the operation switches 41 to 50, respectively. Yellow color is correlated with the second function group G2.

The assignment of these functions is only one example, and functions included in each function group can be freely selected. Configuration with three or more function groups may be applicable. The number of the operation switchs may be determined in accordance with the configuration of the device. The number of functions included in each function group may be smaller than that of the operation switches, and in such a case, there are some operation switches to which the functions are not assigned.

The simple display unit 55 is disposed adjacent to a left side of the operation switch 41 arranged at a left end. The simple display unit 55 comprises an emitting unit 55a having LED emittable in red and yellow colors. The simple display unit 55 makes the emitting unit 55a emit light in red and yellow colors in accordance with simple display control information provided from the below-described control unit 60.

The control unit 60 is a function unit for controlling an entire operation of the display operation device 20, and comprises a computer having CPU, ROM, RAM and each kind of interface. The control unit 60 executes a display control process of output image to the display unit 21, and a process or the operation provided to the touch panel 22 and the operation switches 41 to 50. The control unit 60 receives display information from a controller of the molding device 10 and outputs the display control information based on these display information to the display unit 21, and transmits function execution instruction information for executing functions corresponding to operations provided to the touch panel 22 and the operation switches 41 to 50 to the controller of the molding device 10.

The control unit 60 serves as a function unit of a function label display control unit, a display function stop unit, a function group display control unit and a function group switching unit, since the CPU executes a control program stored in the ROM.

Namely, the control unit 60 displays, as the function label display control unit, function labels showing functions included in the selected function group at a lower part of the display unit 21 so as to correspond to the operation switches 41 to 50. The control unit 60 also displays, as the function label display control unit, the selected function group at the simple display unit 55.

Specifically, when the first function group G1 is selected, as shown in Fig. 4(a), the control unit 60 displays the function labels 31a to 40a showing the functions included in the first function group G1 at the lower part of the display unit 21, and makes the emitting unit 55a of the simple display unit 55 emit light in red color. The function labels 31a to 40a comprise title parts 31a1 to 40a1 and graphics parts 31a2 to 40a2, respectively. Each of the function labels 31a to 40a is preferable to be provided a reddish color which is correlated with the first function group G1.

when the second function group G2 is selected, as shown in Fig. 5(a), the control unit 60 displays the function labels 31b to 40b showing the functions included in the second function group G2 at the lower part of the display unit 21, and makes the emitting unit 55a of the simple display unit 55 emit light in yellow color. The function labels 31b to 40b comprise title parts 31b1 to 40b1 and graphics parts 31b2 to 40b2, respectively. Each of the function labels 31b to 40b is preferable to be provided a yellowish color which is correlated with the second function group G2.

The control unit 60 alternately switches, as the function group switching unit, the selected function group either the first function group G1 or the second function group G2, when a right swipe operation or a left swipe operation are provided at the lower part of the touch panel 22 (namely, the part corresponding to the above function labels) in a case that the function labels 31a to 40a or the function labels 31b to 40b are displayed. The right swipe operation and the left swipe operation correspond to a function group selection switching operations. The display operation device 20 may comprise a push-button switch for selecting and switching the function group.

The control unit 60 shifts, as the display function stop unit, a normal mode to a power saving mode saving electricity consumption, for example when the operation is not made for a certain period (for example, ten minutes) to the touch panel 22 and the operation switches 41 to 50. At this moment, the control unit 60 stops emitting light of a back light of the display unit 21 (in a case of a liquid crystal display) or EL element (in a case of an organic EL display), namely stops the display function of the display unit 21. Thus, as shown in Fig. 4(b) and Fig. 5(b), the display of the display unit 21 is extinguished. At this moment, the control unit 60 continues to emit light of the emitting unit 55a in a color correlated with the selected function group. The control unit 60 is only configured to emit light of emitting unit 55a of the simple display unit 55 at least when the display function of the display unit 21 is stopped.

The control unit 60 changes the display of the function labels corresponding to the operation switch to which the operation is provided, when the operation is provided to the operation switch 41 to 50. For example, when the first function group G1 is selected and the operator presses the operation switch 42 using a finger F, the control unit 60, as shown in in Fig. 6, changes the color of the graphic part 32a2 of the function label 32a corresponding to the operation switch 42. Alternatively, the control unit 60 may highlight a letter part of the corresponding function label and change a shape of the graphics part.

As described above, according to the injection molding machine 1 of the present embodiments, the display operation device 20 comprises the simple display unit 55 having a simple configuration in comparison to the display unit 21. Even if the function labels showing the functions assigned to the plurality of the operation switches 41 to 50 are not displayed in a case that the display function of the display unit 21 is stopped, the selected function group is displayed at the simple display unit 55. Thus having such configuration, the operator can recognize the selected function group more certainly, and an estimate range of the function assigned to the operation switches 41 to 50 can be narrowed. Therefore, the accuracy of an input operation is effectively improved in a condition that function assigned to the operation switches 41 to 50 is not recognized.

Different colors are correlated with the first function group G1 and a second function group G2, respectively, and the simple display unit 55 comprises the emitting unit 55a emittable in colors correlated with each function group. The control unit 60 makes the emitting unit 55a emit light in the color corresponding to the selected function group, and the simple display unit 55 displays the selected function group. Thus, the selected function group can be displayed by the emitting unit 55a of the simple display unit 55 by emitting light, and the function group can be displayed with a simple configuration.

The control unit 60 changes the display of the function label corresponding to the operation switch to which the operation is provided when the operation is provided to the operation switches 41 to 50. Thus, the operator can recognize more certainly the operation switch to which the operation is provided and the function assigned to the operation switch.

The control unit 60 switches the selected function group either the first function group G1 or the second function group G2 in accordance with the touch panel 22 arranged to overlap the display unit 21, and the input of the right swipe operation and the left swipe operation on the lower part of the touch panel 22. Thus, the function group selected by an intuitive operation can be switched.

According to the injection molding machine 1 of the present embodiments, the accuracy of an input operation is effectively improved in a condition that function assigned to the operation switches 41 to 50 of the display operation device 20 is not recognized, therefore an input by an unintentional operation can be suppressed.

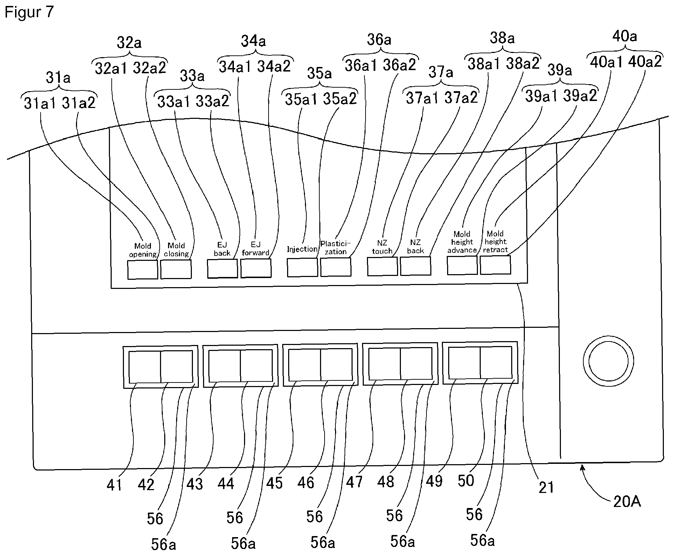

According to the display operation device 20 of the present embodiments, the operation switches 41 to 50 are arranged in a horizontal direction along a lower edge of the display unit 21, and the simple display unit 55 is disposed adjacent to a left side of the operation switch 41 arranged at a left end, however, the configuration is not limited thereto. Instead of such simple display unit 55, for example as shown in Fig. 7, the display operation device 20A may comprise a display unit 56 arranged so as to surround the operation switches 41 to 50. The simple display unit 56 comprises an emitting unit 56a having a LED and a square-frame light guiding member which are emittable in red and yellow colors. The emitting unit 56a emits light corresponding to the function group selected by the control unit 60. Thus, an impression can be provided that the operation switches 41 to 50 and the emitting unit 56a of the simple display unit 56 are relevant to each other, and the operator can recognize more certainly meaning of the color emitted from the emitting unit 56a.

According to the above embodiments, the simple operation switch 55 comprises the emitting unit 55a consisting of the LED, however the configuration is not limited thereto. For example, the simple display unit having a liquid display apparatus comprising a seven-segment display unit used for a dial of a watch and a clock may be applied, different numbers may be correlated with the first function group G1 and the second function group G2, respectively, and the selected function group may be displayed by displaying the numbers at the seven-segment display unit. Furthermore, other than the colors and numbers, each function group may be displayed using images and graphics at the simple display unit.

According to the above embodiments, the injection molding machine which injects resin materials such as plastics to the mold is described, however it is not limited thereto. Other thank the injection molding machine, for example a die-casting machine for press-inputting metal materials into the mold, the present invention may be applied to the molding machine for injecting the material of a molded article into the mold. Additionally, the present invention may be applied an industrial machine other than the molding machine.

The present invention is described above, however, it is not limited to the examples described herein. Examples which may be modified by adding and deleting a structural elements, changing in design, combining features of the above embodiments are included in a scope of the present invention.

### REFERENCE NUMERALS

1: Injection molding machine (molding machine)
10: Molding device
20, 20A: Display operation device
21: Display unit
22: Touch panel
31a-40a, 31b-40b: Function label
31a1-40a1, 31b1-40b1: Title part
31a2-40a2, 31b2-40b2: Graphics part
41-50: Operation switch
55, 56: Simple display unit
55a, 56a: Emitting unit
60: Control unit (Function label display control unit, Display function stop unit, Function group display control unit, Function group switching unit)
800: Display device
810: Display unit
810a: Lower edge
811a-814a, 811b-814b, 811c-814c: Label
821: Direct screen selecting button
G1: First function group
G2: Second function group

## Claims

1. A display operation device comprising:
a display unit,
a plurality of operation switches which is arranged adjacent to said display unit, and to which function included in a selected function group of a plurality of function groups is assigned,
a function label display control unit configured to display function labels showing functions assigned to said plurality of operation switches on said display unit,
a display function stop unit configured to stop display function of said display unit,
a simple display unit arranged adjacent to said plurality of operation switches, and
a function group display control unit configured to display said selected function group on said simple display unit when at least said display function stop unit stops the display function of said display unit.

2. A display operation device according to claim 1, wherein
different colors are correlated with said plurality of function groups, respectively,
said simple display unit comprises an emitting unit emittable in colors correlated with said plurality of function groups, respectively, and
said function group display control unit makes said emitting unit emit light in a color correlated with said selected function group, and said simple display unit displays said selected function group.

3. A display operation device according to claim 2, wherein said emitting unit is arranged so as to surround said plurality of operation switches.

4. A display operation device according to any one of claims 1 to 3, wherein said function label display control unit changes display of the function label corresponding to the operation switch, when an operation is provided to said function switch.

5. A display operation device according to any one of claims 1 to 4 comprising,
a touch panel arranged to overlap said display unit, and
a function group switching unit configured to switch the selected function group of said plurality of function groups in accordance with an input of function group selection switching operation to said touch panel, wherein
said function group selection switching operation is a swipe operation that an operation tool touching a surface of said touch panel is slid in a determined direction and released from the surface of said touch panel

6. A molding machine comprising a display operation device according to any one of claims 1 to 5 and a molding device configured to operate in accordance with an input operation to said display operation device.
